# EUROPÄISCHE PATENTANMELDUNG

(11) **EP 0 984 544 A1**
(43) Veröffentlichungstag der Anmeldung: **08.03.2000**
(21) Anmeldenummer: 99115312.3
(22) Anmeldetag: 03.08.1999
(51) Int. Cl.: H02K 3/12

(54) **Verbindung von elektrischen Leitern in einer elektrischen Machine und Verfahren zur Verbindung dergleichen**

(30) Priorität: 03.09.1998 DE 19840125
(71) Anmelder: ABB PATENT GmbH, 68309 Mannheim (DE)
(72) Erfinder: Nitschke, Thomas, Dipl.-Ing., 67577 Alsheim (DE)
(74) Vertreter: Miller, Toivo

(57) **Zusammenfassung**

Es wird eine Verbindung von mindestens zwei parallel angeordneten Leiterenden von elektrischen Leitern zu einer Wicklung für eine elektrische Maschine, insbesondere für den Stator eines Turbo-Generators vorgeschlagen. Jedes Leiterende (1, 2) ist dabei an seiner Stirnfläche (3) mit einer Verbindungsplatte (8, 9) verlötet und die beiden Verbindungsplatten sind miteinander verlötet.

Ferner wird ein Verfahren zur Verbindung von mindestens zwei Leiterenden von elektrischen Leitern vorgeschlagen. Folgende Verfahrensschritte sind vorgesehen:
- Ein erstes Leiterende (1) wird an einer Biegemaschine abgemeißelt.
- Eine Verbindungsplatte (8) wird mit dem Leiterende (1) verlötet, wobei die Verbindungsplatte gegen das Leiterende gepreßt wird.
- Der Leiter wird isoliert und in den Blechkörper der elektrischen Maschine eingelegt.
- Ein zweites Leiterende (2) wird in ähnlicher Art und Weise vorbehandelt und in den Blechkörper der elektrischen Maschine eingelegt.
- Die Verbindungsplatten (8, 9) beider Leiterenden (1, 2) werden gegeneinandergepreßt und miteinander verlötet.

## Beschreibung

Die Erfindung bezieht sich auf eine Verbindung von elektrischen Leitern gemäß dem Oberbegriff des Anspruchs 1 sowie auf ein Verfahren zur Verbindung von elektrischen Leitern gemäß dem Oberbegriff des Anspruchs 2.

Zur Leiterverbindung an Statorwicklungen von Turbo-Generatoren ist es allgemein bekannt, zunächst das Leiterende an der Biegemaschine abzumeißeln. Anschließend werden die Teilleiter an der Stirnseite des Leiterendes verschweißt und der Statorleiter bzw. Statorstab wird isoliert. In einem weiteren Schritt erfolgt der Einbau der isolierten Statorstäbe in den Blechkörper des Stators. Die Verbindung von zwei parallel im Blechkörper angeordneten Leiterenden zu einer Spule erfolgt durch Auflöten einer speziellen Öse auf beiden Leiterenden, wobei die Verlötung an den Seitenwandungen der Leiterenden erfolgt.

Dabei ist es von Nachteil, daß die zur Verlötung benötigte Öse aufwendig und teuer in der Herstellung ist. Ferner wird sehr viel Lot benötigt. Da die Lötung am bereits isolierten Leiter erfolgt und dabei relativ viel Wärmeenergie eingebracht wird, hat dies einen hohen Temperaturanstieg in den Isolationsmaterialen zur Folge. Das erforderliche Lötwerkzeug ist sehr schwer (Gewicht ca. 100 kg) und es wird ein kleiner Kran benötigt, um das Lötwerkzeug während des Lötvorganges zu fixieren. Zudem ist die Zugänglichkeit des Lötwerkzeuges zu den im Blechkörper des Stators eingebauten Stäben problematisch.

Der Erfindung liegt die Aufgabe zugrunde, eine Verbindung von elektrischen Leitern der eingangs genannten Art anzugeben, welche in einfacher Art und Weise angefertigt werden kann. Ferner soll ein Verfahren zur Verbindung von elektrischen Leitern angegeben werden.

Diese Aufgabe wird bezüglich der Verbindung von elektrischen Leitern in Verbindung mit den Merkmalen des Oberbegriffes erfindungsgemäß durch die im Kennzeichen des Anspruchs 1 angegebenen Merkmale gelöst.

Die Aufgabe wird bezüglich des Verfahrens zur Verbindung von elektrischen Leitern in Verbindung mit den Merkmalen des Oberbegriffes erfindungsgemäß durch die im Kennzeichen des Anspruchs 2 angegebenen Merkmale gelöst.

Die mit der Erfindung erzielbaren Vorteile bestehen insbesondere darin, daß die erforderlichen Verbindungsplatten sehr einfach und preiswert in der Herstellung sind. Wesentliche Lötungen - die Verlötungen der Leiterenden mit den Verbindungsplatten -erfolgen bereits in der Biegemaschine, d. h. an den noch nicht isolierten Statorstäben und damit außerhalb des Blechkörpers der elektrischen Maschine in leicht zugänglicher, unproblematischer Umgebung. Die bei den im Blechkörper des Stators eingebauten Stäben notwendige Verlötung beider Verbindungsplatten ist hinsichtlich ihrer Fläche relativ klein, so daß während dieses Lötvorganges wenig Wärmeenergie in die Isolationsmaterialen eingebracht wird, was sich in einer relativ geringen, für die Isolationsmaterialen unkritischen Temperaturerhöhung niederschlägt. Es wird sehr wenig Lot benötigt, das erforderliche Lötvolumen beträgt nur einen Bruchteil der bei der bekannten, eingangs beschriebenen Herstellungsweise benötigten Menge.

Ferner sind die erforderlichen Lötwerkzeuge relativ klein und damit einfach handhabbar. Insgesamt ergibt sich - bedingt durch die erforderliche hohe Anzahl der Lötungen pro elektrischer Maschine zur Herstellung einer Wicklung - ein beträchtliches Einsparpotential pro elektrischer Maschine.

Die Erfindung wird nachstehend anhand der in der Zeichnung dargestellten Ausführungsbeispiele erläutert. Es zeigen:
- Fig. 1: eine perspektivische Ansicht der Mittel, die zur vorbereitenden Verlötung eines elektrischen Leiters erforderlich sind,
- Fig. 2: eine seitliche Ansicht der Mittel, die zur Verbindung von zwei elektrischen Leitern erforderlich sind.

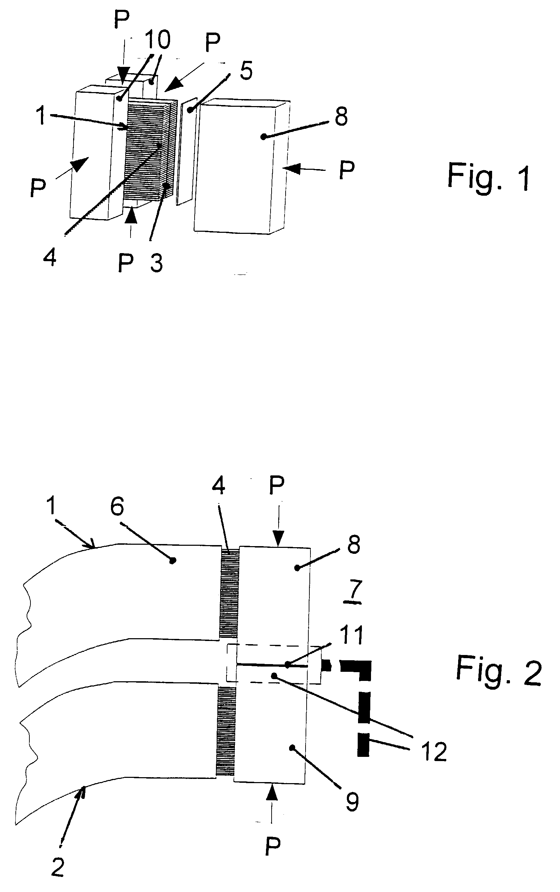

In Fig. 1 ist eine perspektivische Ansicht der für einen elektrischen Leiter erforderlichen Mittel dargestellt. Es ist das Leiterende 1 eines Statorstabes zu erkennen, der als Unterlage für eine Statorwicklung eines Turbo-Generators dient. Der Statorstab setzt sich aus einer Vielzahl einzelner Teilleiter 4 zusammen. Es besteht die Aufgabe, das Leiterende 1 mit einem weiteren, in Fig. 2 mit Ziffer 2 bezeichneten Leiterende elektrisch leitend zu verbinden. Durch eine Vielzahl derartiger Verbindungen von einzelnen Statorstäben wird die Wicklung des Stators aufgebaut.

Hierzu wird in einem vorbereitenden Verfahrensabschnitt zunächst eine Verbindungsplatte 8 an der Stirnfläche 3 des Leiterendes 1 verlötet. Diese Verbindungsplatte 8 ist als Kupferplatte ausgebildet und kann sehr einfach hergestellt werden. Die vorbereitende Verlötung erfolgt in der zur Biegung des Statorstabes eingesetzten Biegemaschine.

Im einzelnen ergibt sich folgender Ablauf der einzelnen Verfahrensschritte: In einem ersten Schritt wird das Leiterende 1 an der Biegemaschine abgemeißelt und die Stirnseite 3 des Leiterendes wird angeschliffen. In einem zweiten Schritt wird die Verbindungsplatte 8 unter Zwischenlegung einer Lötfolie 5 und unter Verwendung einer Induktorzange mit dem Leiterende 1 verlötet. Dabei bezeichnen die Pfeile P die während des Lötvorganges aufzuwendenden Preßkräfte und Preßrichtungen. Die beiden Breitseiten des Leiterendes 1 werden mittels der Preßbacken 10 der Biegemaschine zusammengepreßt. Gleichzeitig werden auch die beiden Schmalseiten des Leiterendes 1 unter Einsatz weiterer, nicht dargestellter Preßbacken zusammengepreßt. Die Pressung der Verbindungsplatte 8 gegen die Stirnfläche 3 erfolgt durch weitere Preßbacken.

Nach Beendigung dieses vorbereitenden Lötvorgangs wird der Statorstab der Biegemaschine entnommen und in einem dritten Verfahrensschritt isoliert. In einem vierten Verfahrensschritt erfolgt anschließend der Einbau des Leiters in den Blechkörper des Turbo-Generators.

Die vorstehend für das Leiterende 1 beschriebenen Verfahrensschritte werden in gleicher Art und Weise auch für ein zweites Leiterende 2 durchgeführt, welches als Oberlage für die Statorwicklung des Generators dient. Hierdurch wird das in Fig. 2 gezeigte Leiterende 2 mit angelöteter Verbindungsplatte 9 geschaffen.

In Fig. 2 ist eine seitliche Ansicht der zur Verbindung von zwei elektrischen Leitern erforderlichen Mittel dargestellt. Beide mit elektrischen Isolationen 6 versehene Stäbe sind im Blechkörper des Stators eingebaut, so daß das Leiterende 1 der Unterlage parallel zum Leiterende 2 der Oberlage verläuft. Die mit den Teilleitern 4 der Stäbe verbundenen Verbindungsplatten 8 bzw. 9 werden zur Verlötung im Sinne der skizzierten Pfeile P gegeneinandergepreßt, wobei eine Lötfolie 11 zwischen die miteinander zu verbindenden Flächen gelegt ist. Die Verlötung selbst erfolgt in einem fünften Verfahrensschritt mit Hilfe eines gestrichelt skizzierten Induktors 12, wobei der zu erhitzende Bereich eng begrenzt ist, um eine unnötig hohe Wärmeeinbringung in die Verbindungsplatten und die elektrische Isolation zu vermeiden. Die fertige Stab- bzw. Leiterverbindung Leiterende 1 - Verbindungsplatte 8 - Verbindungsplatte 9 - Leiterende 2 ist mit Ziffer 7 bezeichnet.

## Patentansprüche

1. Verbindung von mindestens zwei parallel angeordneten Leiterenden von elektrischen Leitern zu einer Wicklung für eine elektrische Maschine, insbesondere für den Stator eines Turbo-Generators, dadurch gekennzeichnet, daß jedes Leiterende (1, 2) an seiner Stirnfläche (3) mit einer Verbindungsplatte (8, 9) verlötet ist und die beiden Verbindungsplatten miteinander verlötet sind.

2. Verfahren zur Verbindung von mindestens zwei Leiterenden von elektrischen Leitern zu einer Wicklung für eine elektrische Maschine, insbesondere für den Stator eines Turbo-Generators, dadurch gekennzeichnet, daß
- ein erstes Leiterende (1) an einer Biegemaschine abgemeißelt und die Stirnfläche (3) des Leiterendes angeschliffen werden,
- eine Verbindungsplatte (8) vorzugsweise unter Zwischenlegung einer Lötfolie (5) mit dem Leiterende (1) in der Biegemaschine verlötet wird, wobei das Leiterende zusammengepreßt und die Verbindungsplatte gegen das Leiterende gepreßt werden,
- daß der Leiter isoliert und in den Blechkörper der elektrischen Maschine eingelegt wird,
- daß ein zweites Leiterende (2) in ähnlicher Art und Weise vorbehandelt und in den Blechkörper der elektrischen Maschine eingelegt wird,
- daß die Verbindungsplatten (8, 9) beider Leiterenden (1, 2) gegeneinandergepreßt und vorzugsweise unter Zwischenlegung einer Lötfolie (11) miteinander verlötet werden.

3. Verfahren nach Anspruch 2, gekennzeichnet durch den Einsatz von Induktoren (12) zur Verlötung.
